(19) Europäisches Patentamt
European Patent Office
Office européen des brevets

(11) **EP 2 638 379 B1**

(12) **EUROPÄISCHE PATENTSCHRIFT**

(45) Veröffentlichungstag und Bekanntmachung des Hinweises auf die Patenterteilung:
**26.02.2020 Patentblatt 2020/09**

(21) Anmeldenummer: **11779414.9**

(22) Anmeldetag: **08.11.2011**

(51) Int Cl.:
*G01M 15/02* (2006.01)  *G01M 15/04* (2006.01)
*G01L 5/00* (2006.01)  *F02F 11/00* (2006.01)

(86) Internationale Anmeldenummer:
**PCT/EP2011/069594**

(87) Internationale Veröffentlichungsnummer:
**WO 2012/062725 (18.05.2012 Gazette 2012/20)**

(54) **EINRICHTUNG ZUR REIBUNGSMESSUNG**

DEVICE FOR FRICTION MEASUREMENT

DISPOSITIF POUR LA MESURE DE FROTTEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.11.2010 AT 18382010**

(43) Veröffentlichungstag der Anmeldung:
**18.09.2013 Patentblatt 2013/38**

(73) Patentinhaber: **AVL List GmbH**
**8020 Graz (AT)**

(72) Erfinder:
• **KOMETTER, Bernhard**
**A-8111 Judendorf (AT)**
• **ROQUES, Olivier**
**Banbury, Oxfordshire OX16 4QR (GB)**
• **MELDT, Wolfgang**
**A-8010 Graz (AT)**

(74) Vertreter: **Babeluk, Michael**
**Patentanwalt**
**Florianigasse 26/3**
**1080 Wien (AT)**

(56) Entgegenhaltungen:
**JP-A- 11 108 801  JP-A- 2002 156 298**
**JP-A- 2010 243 390**

**Beschreibung**

Die Erfindung betrifft eine Einrichtung zur Reibungsmessung an einer Zylinder-Kolben-Anordnung, wobei ein zumindest einen Kolbenring aufweisender, hin- und hergehender Kolben in einer Zylinderlaufbuchse angeordnet ist, mit zumindest einem Dichtelement zwischen Zylinderlaufbuchse und einem Zylinderkopf, wobei eine innere Mantelfläche der Zylinderlaufbuchse gegenüber dem Zylinderkopf abgedichtet ist und das Dichtelement zwischen der inneren Mantelfläche und einem in die Zylinderlaufbuchse hineinragenden Absatz des Zylinderkopfes angeordnet ist.

Aus der Integration der Kräfte entlang der Kolbenlaufbahn in Zylinderrichtung kann die Reibung zwischen der aus Kolben und Kolbenringen bestehenden Kolbengruppe und der Zylinderlauffläche ermittelt werden.

Die JP 2010-243 390 A1 zeigt eine Einrichtung zur Reibungsmessungen an einer Zylinder-Kolben-Anordnung, wobei ein zumindest einen Kolbenring aufweisender hin- und hergehender Kolben in einer Zylinderlaufbuchse angeordnet ist. Eine innere Mantelfläche der Zylinderlaufbuchse ist gegenüber dem Zylinderkopf abgedichtet, wobei ein Dichtelement zwischen der inneren Mantelfläche und einem in die Zylinderlaufbuchse hineinragenden Absatz des Zylinderkopfes angeordnet ist. Dabei liegt die Zylinderlaufbuchse mit ihrer oberen Stirnseite am Zylinderkopf an, weshalb keine vollständige Entkoppelung zwischen der Laufbuchse einerseits und dem Zylinderkopf und Grundaggregat andererseits möglich ist. Dadurch kann eine Verfälschung des Messergebnisses nicht ausgeschlossen werden.

Die JP 2002-156298 A beschreibt eine Messmethode zum Messen der Reibungskräfte bei einem Kolben, wobei Messfehler bei der Reibungsmessung, welche durch Trägheitskräfte der bewegbaren Laufbuchse auftreten, herausgerechnet werden. Ein Hinweis auf eine vollständige Entkoppelung der Laufbuchse vom Zylinderkopf und vom Grundaggregat ist dieser Veröffentlichung nicht zu entnehmen.

Die JP 11-108 801 A offenbart eine Messeinrichtung für Reibungskräfte zwischen einem Kolben und einer Laufbuchse einer Brennkraftmaschine, wobei ein Dichtelement zwischen der inneren Mantelfläche der Zylinderlaufbuchse und einem in die Zylinderlaufbuchse hineinragenden Absatz des Zylinderkopfes angeordnet ist. Die Zylinderlaufbuchse und der Zylinderblock der Brennkraftmaschine sind über einen Bolzen miteinander verbunden. Eine vollständige Entkoppelung der Zylinderlaufbuchse vom Zylinderkopf und dem Grundaggregat ist somit auch hier nicht vorgesehen.

Aus der JP 60-031037 A ist eine Messeinrichtung zur Messung der Reibung eines in einer Zylinderlaufbuchse hin- und hergehenden Kolbens bekannt. Dabei ist zwischen dem Zylinderkopf und einem Laufbuchsenträger ein Haltering angeordnet, wobei zwischen dem Haltering und dem oberen Ende der Zylinderlaufbuchse ein Ringspalt ausgebildet ist, welcher durch eine metallische Dichtplatte gefüllt ist.

Aus der JP 59-088638 A ist eine Einrichtung zur Messung der Kolbenreibung bei einer Brennkraftmaschine bekannt, wobei die Zylinderlaufbuchse in einem Zylinder angeordnet ist, und wobei zwischen dem Zylinder und der Zylinderlaufbuchse mehrere O-Ringe angeordnet sind.

Bekannte Einrichtung zur Reibungsmessung weisen den Nachteil auf, dass die Dichtelemente für die Zylinderlaufbuchse, insbesondere zur Abdichtung zwischen Zylinderlaufbuchse und Zylinderkopf, Kräfte in Richtung der Bewegungsrichtung der Kolbengruppe an der Zylinderlaufbuchse verursachen, welche die Messung und in weiterer Folge die Integration der Kolbengruppenreibung verfälschen.

Aufgabe der Erfindung ist es, diese Nachteile zu vermeiden und bei einer Einrichtung zur Reibungsmessung der eingangsgenannten Art die Messgenauigkeit zu erhöhen.

Erfindungsgemäß wird dies dadurch erreicht, dass das Dichtelement im Bereich seiner der Zylinderlaufbuchse zugewandten äußeren Mantelfläche einen ringförmigen Absatz aufweist, welcher eine der Zylinderlaufbuchse zugewandte äußere Ringfläche ausbildet, deren Durchmesser kleiner ist als der größte Durchmesser des Dichtelementes.

Dadurch kann die Kraft des Dichtelementes auf die Zylinderlaufbuchse und somit der Einfluss der Ringreibkraft des Dichtelementes auf das Messergebnis verringert werden. Im Idealfall kann damit ein Ausgleich der am Dichtelement wirkenden angreifenden Gaskräfte erreicht werden.

Besonders vorteilhaft ist es dabei, wenn das Dichtelement durch einen Dichtring, vorzugsweise einen Kolbenring, gebildet ist. Das Dichtelement kann dabei in einer Ringnut einer äußeren Mantelfläche des Absatzes angeordnet sein.

Durch die spezielle Abdichtung mittels des Dichtringes und des Absatzes im Zylinderkopf wird verhindert, dass die Gaskräfte axial auf die Laufbuchse einwirken. Somit haben diese auch keinen Einfluss auf das Messergebnis und es werden nur die Reibungskräfte des Kolbens bzw. Kolbenseitenkräfte auf die Messaufnehmer übertragen.

Die Laufbuchse ist somit vom Grundaggregat entkoppelt und ist nur durch den Dichtring und die Messaufnehmer angebunden.

Dabei ist vorzugsweise vorgesehen, dass die Zylinderlaufbuchse in einem Laufbuchsenträger angeordnet ist, wobei die Zylinderlaufbuchse mit einem Haltering am Laufbuchsenträger befestigt ist. Um einen konstanten Dichtspalt zwischen dem Absatz im Zylinderkopf und der Zylinderlaufbuchse zu gewährleisten, ist es besonders vorteilhaft, wenn zur Zentrierung des Zylinderkopfes in der Laufbuchse zwei gegenüberliegende Zentrierbohrungen zur Aufnahme eines vorzugsweise entfernbaren Zentrierstiftes vorgesehen werden.

Um im Messbetrieb ein Verfälschen des Messergebnisses durch Kräfte aufgrund von unterschiedlicher Wärmedehnungen der am Kraftaufnehmer angreifenden Kräfte zu vermeiden, weist die Grundplatte zumindest einen Konditionierkanal mit einem Eintritt und einem Austritt für Kühlflüssigkeit auf, über welchen die Grundplatte und somit den darauf verschraubten Sensorträger und den Laufbuchsenträger im gleichen Kühlflüssigkeitskreislauf auf die gleiche Temperatur zu bringen.

Die Erfindung wird im Folgenden anhand der Figuren näher erläutert. Es zeigen:

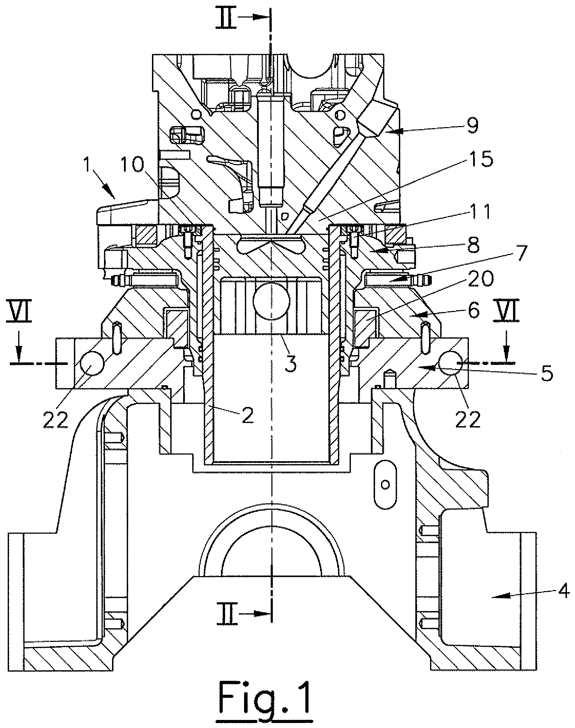

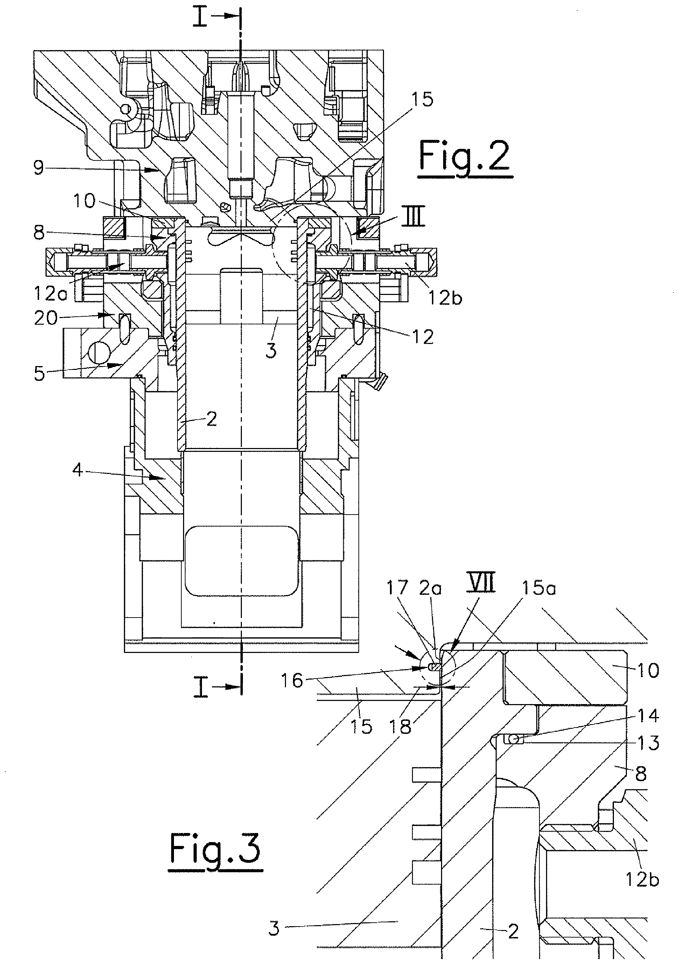

Fig. 1 eine erfindungsgemäße Einrichtung in einem Schnitt gemäß der Linie I - I in Fig. 2;

Fig. 2 diese Einrichtung in einem Schnitt gemäß der Linie II - II in Fig. 1;

Fig. 3 das Detail III aus Fig. 2;

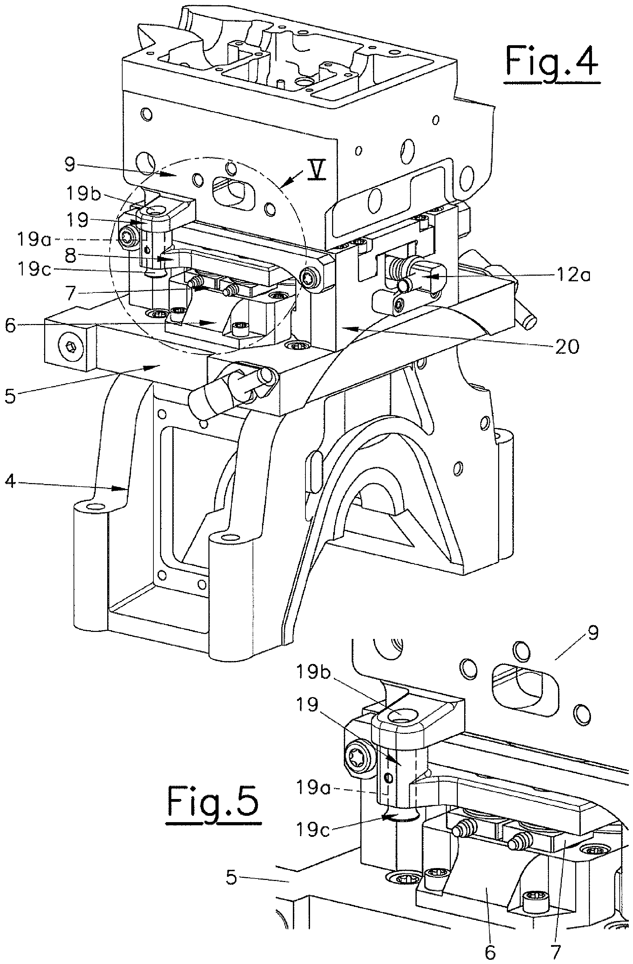

Fig. 4 die Einrichtung in einer Schrägansicht;

Fig. 5 das Detail V aus Fig. 4;

Fig. 6 eine Grundplatte in einem Schnitt gemäß der Linie VI - VI in Fig. 1; und

Fig. 7 das Detail VII aus Fig. III in einer Ausführungsvariante.

Die Einrichtung 1 zur Reibungsmessung der Reibungskräfte zwischen einem in einer Zylinderlaufbuchse 2 hin- und hergehenden Kolben 3 weist ein Grundaggregat 4, eine Grundplatte 5, einen Sensorträger 6 zur Aufnahme von 3-D-Kraftsensoren 7, einen Laufbuchsenträger 8 und einen Zylinderkopf 9 auf. Die Zylinderlaufbuchse 2 ist über einen Haltering 10 am Laufbuchsenträger 8 befestigt, wobei der Haltering 10 mittels Schrauben 11 am Halteringträger 8 angeschraubt ist. Zwischen der Zylinderlaufbuchse 2 und dem Laufbuchsenträger 8 ist ein Kühlflüssigkeitsmantel 12 ausgebildet, welcher mit Zu- und Abflussleitungen 12a, 12b verbunden ist. Zwischen der Zylinderlaufbuchse 2 und dem Laufbuchsenträger 8 ist in einer umlaufenden Nut 13 ein Dichtring 14 angeordnet. Mit Bezugszeichen 20 ist ein Zylinderkopfträger bezeichnet.

Der Zylinderkopf 9 weist einen in die Zylinderlaufbuchse 2 hineinragenden scheibenförmigen Absatz 15 auf, in dessen äußerer Mantelfläche 15a eine Ringnut 16 eingeformt ist. In der Ringnut 16 ist ein ringförmiges Dichtelement 17 angeordnet, welches ähnlich einem Kolbenring durch die Gaskräfte gegen die innere Mantelfläche 2a der Zylinderlaufbuchse 2 gepresst wird.

Durch die spezielle Abdichtung mittels des ringförmigen Dichtelementes 17 und des Absatzes 15 im Zylinderkopf 9 wird verhindert, dass die Gaskräfte axial auf die Zylinderlaufbuchse 2 einwirken. Somit haben diese auch keinen Einfluss auf das Messergebnis und es werden nur die Reibungskräfte des Kolbens 3 bzw. die Kolbenseitenkräfte auf die Kraftsensoren 7 übertragen. Die Zylinderlaufbuchse 2 ist somit vom Grundaggregat 4 und vom Zylinderkopf 9 vollkommen entkoppelt und ist nur durch das Dichtelement 17 und die Kraftsensoren 7 an diese angebunden.

Um einen konstanten Dichtspalt 18 zwischen dem Absatz 15 des Zylinderkopfes 9 und der inneren Mantelfläche 2a der Zylinderlaufbuchse 2 zu gewährleisten, ist zwischen dem Laufbuchsenträger 8 und dem Zylinderkopf 9 eine Zentriereinrichtung 19, bestehend aus einer ersten Zentrierbohrung 19a im Laufbuchsenträger 8 und einer zweiten Zentrierbohrung 19b im Zylinderkopf 9, sowie einen in die Zentrierbohrungen 19a, 19b eingeführten Zentrierstift 19c. Jeder Zentrierstift 19c wird nach der Montage des Zylinderkopfes 9 wieder entfernt.

Um im Messbetrieb des Motors die normal zur Kolbenlaufrichtung wirkenden Kräfte auf die Kraftsensoren 7, die nicht von der Bewegung des Kolbens 3 stammen (Kräfte auf Grund von unterschiedlichen Wärmedehnungen) und die somit das Messergebnis verfälschen können, zu reduzieren, muss gewährleistet werden, dass vor Beginn der Messungen die am Kraftsensor 7 angreifenden Teile (Laufbuchsenträger 8, Sensorträger 6) ähnliche Temperaturen aufweisen. Damit können ähnliche Wärmedehnungen dieser Teile realisiert und somit der Einfluss der dadurch entstehenden Querkräfte auf die Kraftsensoren 7 verringert werden.

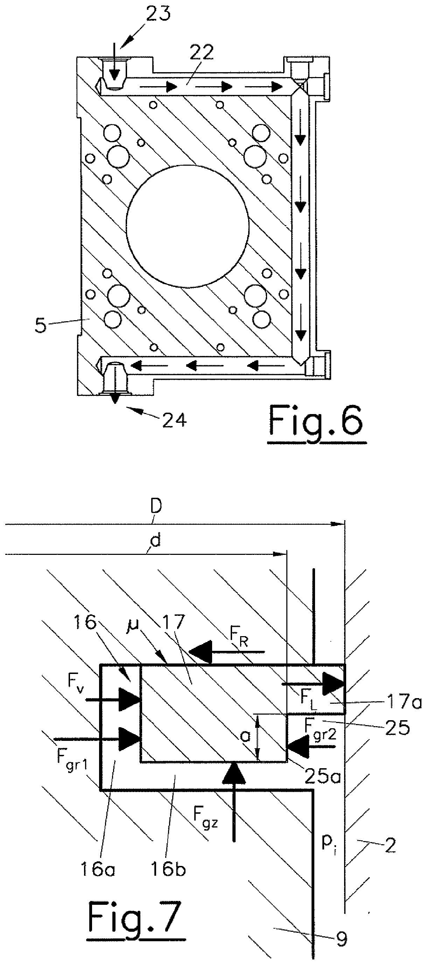

Zu diesem Zweck ist die Grundplatte 5 mit Konditionierkanälen 22 mit einem Eintritt 23 und einem Austritt 24 für Kühlflüssigkeit versehen, um die Grundplatte 5 und somit den darauf verschraubten Sensorträger 6 und den im selben Kühlflüssigkeitskreislauf angeordneten Laufbuchsenträger 8 auf die gleiche Temperatur zu bringen (Fig. 6).

Weiters kann die Kraft des Dichtelementes 17 auf die Zylinderlaufbuchse 2 und somit der Einfluss der Ringreibkraft des Dichtelementes 17 auf das Messergebnis durch einen Absatz 25 mit der Höhe a im Dichtelement 17 verringert, im Idealfall sogar ein Ausgleich der angreifenden Gaskräfte erreicht werden. Wie in Fig. 7 gezeigt ist, weist das Dichtelement 17 im Bereich seiner der Zylinderlaufbuchse 2 zugewandten äußeren Mantelfläche 17a einen ringförmigen Absatz 25 aufweist auf der Seite des Kolbens 3 einen stufenartigen Absatz 25 auf, welcher beispielsweise durch eine umlaufende Einfräsung gebildet sein kann. Der ringförmige Absatz 25 bildet eine der Zylinderlaufbuchse 2 zugewandte äußere Ringfläche 25a aus, deren Durchmesser d kleiner ist als der größte Durchmesser D des Dichtelementes 17. Zwischen dem Dichtelement 17 und der Ringnut 16 ist ein axialer und ein radialer Spalt 16a, 16b, sodass auf der Innenseite des Dichtelementes 17 der Gasinnendruck $p_i$ anliegt. Durch den Absatz 25 wirkt auch auf die Ringfläche 25a mit der Höhe a der Gasinnendruck $p_i$. Auf das Dichtelement 17 wirkt somit zu Folge des Gasinnendruckes $p_i$ die axiale Kraft $F_{gz}$, die radiale Kraft $F_{gr1}$ und die radiale Kraft $F_{gr2}$. Weiters wirkt in radialer Richtung die Vorspannkraft $F_V$ des Dichtelementes 17, sowie die Reibkraft $F_R$ des Dichtelementes 17 in der Ringnut 16. Die resultierende Kraft $F_L$ auf die Zylinderlaufbuchse 2 ergibt sich mit dem Reibungskoeffizienten $\mu$ damit zu:

$$F_L = F_v + F_{gr1} - F_{gr2} - F_{gz} * \mu$$

Im Idealfall ist $F_L = F_v$, so dass nur die relativ kleine Vorspannkraft $F_V$ des Dichtelementes 17 verbleibt.

**Patentansprüche**

1. Einrichtung (1) zur Reibungsmessung an einer Zylinder-Kolben-Anordnung, wobei ein zumindest einen Kolbenring aufweisender, hin- und hergehender Kolben (3) in einer Zylinderlaufbuchse (2) angeordnet ist, mit zumindest einem Dichtelement (17) zwischen Zylinderlaufbuchse (2) und einem Zylinderkopf, wobei eine innere Mantelfläche (2a) der Zylinderlaufbuchse (2) gegenüber dem Zylinderkopf (9) abgedichtet ist und das Dichtelement (17) zwischen der inneren Mantelfläche (2a) und einem in die Zylinderlaufbuchse (2) hineinragenden Absatz (15) des Zylinderkopfes (9) angeordnet ist, **dadurch gekennzeichnet, dass** das Dichtelement (17) im Bereich seiner der Zylinderlaufbuchse (2) zugewandten äußeren Mantelfläche (17a) einen ringförmigen Absatz (25) aufweist, welcher eine der Zylinderlaufbuchse (2) zugewandte äußere Ringfläche (25a) ausbildet, deren Durchmesser (d) kleiner ist als der größte Durchmesser (D) des Dichtelementes (17).

2. Einrichtung (1) nach Anspruch 1, **dadurch gekennzeichnet, dass** das Dichtelement (17) durch einen Dichtring, vorzugsweise einen Kolbenring, gebildet ist.

3. Einrichtung (1) nach Anspruch 1 oder 2, **dadurch gekennzeichnet, dass** das Dichtelement (17) in einer Ringnut (16) einer äußeren Mantelfläche (15a) des Absatzes (15) angeordnet ist.

4. Einrichtung (1) nach einem der Ansprüche 1 bis 3, **dadurch gekennzeichnet, dass** die Zylinderlaufbuchse (2) in einem Laufbuchsenträger (8) angeordnet ist, wobei die Zylinderlaufbuchse (2) mit einem Haltering (10) am Laufbuchsenträger (8) befestigt ist.

5. Einrichtung (1) nach Anspruch 4, **dadurch gekennzeichnet, dass** zur Zentrierung des Zylinderkopfes (9) in der Zylinderlaufbuchse (2) der Zylinderkopf (9) und der Laufbuchsenträger (8) gegenüberliegende Zentrierbohrungen (19a, 19b) zur Aufnahme eines vorzugsweise entfernbaren Zentrierstiftes (19c) aufweist.

6. Einrichtung (1) nach einem der Ansprüche 1 bis 5, **dadurch gekennzeichnet, dass** ein Sensorträger (6) zur Aufnahme von Kraftsensoren (7) mit einer Grundplatte (5) verschraubt ist.

7. Einrichtung (1) nach Anspruch 6, **dadurch gekennzeichnet, dass** die Grundplatte (5) zumindest einen Konditionierkanal (22) mit einem Eintritt (23) und einem Austritt (24) für eine Kühlflüssigkeit aufweist.

**Claims**

1. Device (1) for friction measurement on a cylinder-piston arrangement, wherein a reciprocating piston (3) having at least one piston ring is arranged in a cylinder liner (2), having at least one sealing element (17) between cylinder liner (2) and a cylinder head, wherein an inner lateral surface (2a) of the cylinder liner (2) is sealed with respect to the cylinder head (9) and the sealing element (17) is arranged between the inner lateral surface (2a) and a shoulder (15) of the cylinder head (9) projecting into the cylinder liner (2), **characterised in that** the sealing element (17) has an annular shoulder (25) in the region of its outer lateral surface (17a) facing the cylinder liner (2), which shoulder (25) forms an outer annular surface (25a) facing the cylinder liner (2), the diameter (d) of which is smaller than the largest diameter (D) of the sealing element (17).

2. Device (1) according to claim 1, **characterised in that** the sealing element (17) is formed by a sealing ring, preferably a piston ring.

3. Device (1) according to claim 1 or 2, **characterised in that** the sealing element (17) is arranged in an annular groove (16) of an outer lateral surface (15a) of the shoulder (15).

4. Device (1) according to one of claims 1 to 3, **characterised in that** the cylinder liner (2) is arranged in a liner carrier (8), wherein the cylinder liner (2) is fastened to the liner carrier (8) by means of a retaining ring (10).

5. Device (1) according to claim 4, **characterised in that** for centering the cylinder head (9) in the cylinder liner (2), the cylinder head (9) and the liner carrier (8) have opposite centering bores (19a, 19b) for accommodating a preferably removable centering pin (19c).

6. Device (1) according to one of claims 1 to 5, **characterised in that** a sensor carrier (6) for accommodating force sensors (7) is screwed to a base plate (5).

7. Device (1) according to claim 6, **characterised in that** the base plate (5) has at least one conditioning channel (22) with an inlet (23) and an outlet (24) for a cooling liquid.

## Revendications

1. Dispositif (1) de mesure de frottement sur un ensemble cylindre-piston, dans lequel un piston (3) mobile en va et vient comportant au moins un segment de piston est monté dans une chemise de cylindre (2), au moins un élément d'étanchéité (17) étant installé entre la chemise de cylindre (2) et une culasse, la surface enveloppe interne (2a) de la chemise de cylindre (2) étant étanche vis-à-vis de la culasse (9) et l'élément d'étanchéité (17) étant installé entre la surface enveloppe interne (2a) et un talon (15) de la culasse (9) faisant saillie dans la chemise de cylindre (2), **caractérisé en ce que** l'élément d'étanchéité (17) comporte, dans la zone de sa surface enveloppe externe (17a) tournée vers la chemise de cylindre (2) un talon annulaire (25) qui forme une surface annulaire externe (25a) tournée vers la chemise de cylindre (2) dont le diamètre (D) est inférieur au plus grand diamètre (B) de l'élément d'étanchéité (17).

2. Dispositif (1) conforme à la revendication 1, **caractérisé en ce que** l'élément d'étanchéité (17) est formé par un anneau d'étanchéité, de préférence un segment de piston.

3. Dispositif (1) conforme à la revendication 1 ou 2, **caractérisé en ce que** l'élément d'étanchéité (17) est installé dans une rainure annulaire (16) de la surface enveloppe externe (15a) du talon (15).

4. Dispositif (1) conforme à l'une des revendications 1 à 3, **caractérisé en ce que** la chemise de cylindre (2) est installée dans un support de chemise (8), la chemise de cylindre (2) étant fixée sur le support de chemise (8) par un anneau de retenue (10).

5. Dispositif (1) conforme à la revendication 4, **caractérisé en ce que** pour permettre le centrage de la culasse (9) dans la chemise de cylindre (2), la culasse (9) et le support de chemise (8) comportent des perçages de centrage (19a, 19b) situés en regard permettant la réception d'une broche de centrage (19c) de préférence amovible.

6. Dispositif (1) conforme à l'une des revendications 1 à 5, **caractérisé en ce qu'** un support de capteurs (6) pouvant recevoir des capteurs de force (7) est vissé sur une plaque de base (5).

7. Dispositif (1) conforme à la revendication 6, **caractérisé en ce que** la plaque de base (5) comporte au moins un canal de conditionnement (22) comportant une entrée (23) et une sortie (24) d'un fluide de refroidissement.

# Fig.1

I →

9

10

8

12a

20

5

15

III

12b

12

Fig.2

3

2

4

I →

17  2a  VII  15a

16

15  18

10

14

13

8

12b

3

2

Fig.3

Fig.4

9

19b

19

19a

8

19c

7

6

5

4

V

12a

20

Fig.5

9

19b

19

19a

19c

5

6

7

## Fig.6

## Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2010243390 A
- JP 2002156298 A
- JP 11108801 A
- JP 60031037 A
- JP 59088638 A